# EUROPEAN PATENT SPECIFICATION

(11) **EP 0 533 148 B1**
(45) Date of publication and mention of the grant of the patent: **06.03.1996**
(21) Application number: 92115863.0
(22) Date of filing: 16.09.1992
(51) Int. Cl.: G05B 5/01, G05D 13/62

(54) **Limiter circuit of servo motor control apparatus**
Begrenzerschaltung für Servomotor Steuervorrichtung
Circuit limiteur pour dispositif de régulation de servo-moteur

(30) Priority: 18.09.1991 KR 1632391
(43) Date of publication of application: 24.03.1993
(73) Proprietor: SAMSUNG ELECTRONICS CO., LTD., Suwon-City, Kyounggi-Do 441-370 (KR)
(72) Inventor: Lim, Sang-Gwon, Suwon-shi, Kyonggi-cho (KR)
(74) Representative: Grünecker, Kinkeldey, Stockmair & Schwanhäusser Anwaltssozietät

(56) References cited:
- DE-A- 2 327 142
- FR-A- 2 658 929
- US-A- 4 999 557
- PROCEEDINGS OF THE 1989 AMERICAN CONTROL CONFERENCE vol. 2, 22 June 1989, PITTSBURGH, PA pages 1699 - 1705 SANGSIK YANG AND MING C. LEU 'Stability and performance of a control system with an intelligent limiter'
- PATENT ABSTRACTS OF JAPAN vol. 013, no. 329 (P-904)25 July 1989 & JP-A-10 94 412 (SAWAFUJI ELECTRIC CO LTD)13 April 1989

## Description

### BACKGROUND OF THE INVENTION

### FIELD OF THE INVENTION

The present invention relates to a servo motor for outputting the control signal appropriate for performing a rotary control of a servo motor having a PID (Proportional Integral Derivative) controller, and more particularly to a limiter circuit of a servo motor control apparatus which can perform a limiter control in the right direction or reverse direction, or both the right and reverse directions.

### DESCRIPTION OF THE PRIOR ART

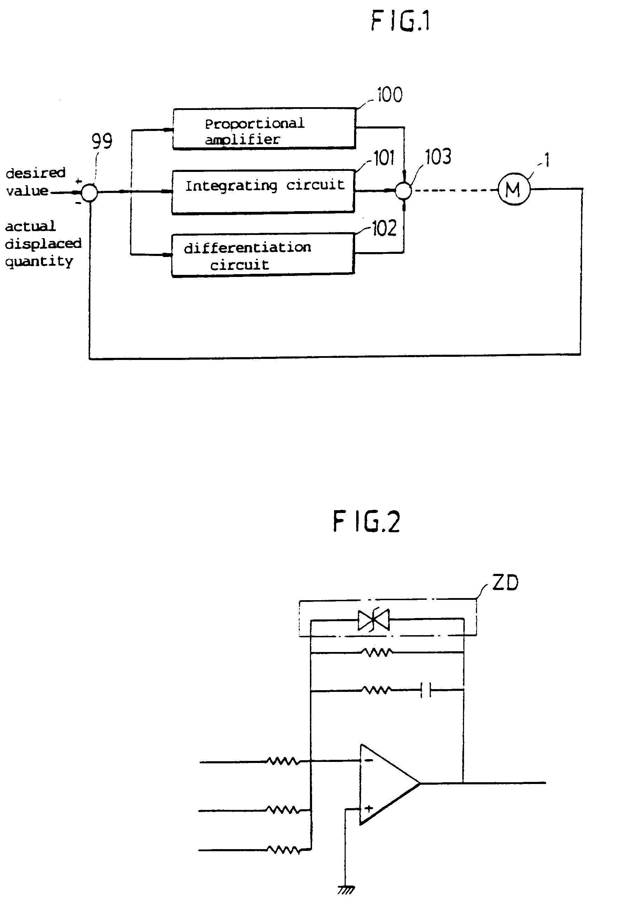

Generally, the PID controller used for automatic control of an AC servo motor, as depicted in Fig. 1, comprises a proportional amplifier 100, an integrating circuit 101 and a differentiation circuit 102.

In the PID controller of the AC servo motor 1 thus constructed, the desired value for servo motor control outputted from desired value command (not shown) and the actual displaced quantity of the servo motor 1 as driven by said desired value are added at an adder 99, the output signal of said adder 99 is amplified at the proportional amplifier 100, the output signal of said adder 99 is integrated in order to zero the errors of the AC servo motor during the driving and the output signal of said adder 99 is differentiated in order to eliminate the delaying elements of the AC servo motor.

And then, each output signal of the proportional amplifier 100, integrating circuit 101 and differentiation circuit 102 is added at an adder 103 for controlling the AC servo motor 1.

The AC servo motor comprising said PID controller can be operated at a speed the user has preset, and the revolution of the servo motor can be adjusted for constant velocity or for appropriate output by utilizing said PID controller as it is desired to display a rated output power.

In this manner, it can be said that excellent achievement can be obtained by constructing said PID controller to the rotary control apparatus of the AC servo motor for PID control, however in the case when an operation is performed in a condition under which predetermined revolution is not reached due to overload even with maximized output of the motor, or when the operation of instantaneous return to a normal load is performed under a condition of overload, or when a start is performed under a condion of the motor being stopped, because among the configurational elements comprising said PID controller, the integral circuit 101, especially, gets excessively accumulated with errors which show deviations from the desired value, causing the output value of integral signal value accmmulated on said integral circuit 101 to increase, there has been a problem of the servo motor running excessively.

Furthermore, lots of hours are spent in order for the output of said increased integral signal value to return to original condition, and especially, in the case when the overload returns to the normal load or the motor which has been at a standstill is started, there has been lots of practical problems in the use of the conventional PID controller .

In order to compensate the aforementioned problems, as illustrated in Fig. 2, a pair of Zener diodes ZD is connected to said PID controller in two directions for limiting the output as much as Zener voltage, however as Zener voltage of said Zener diodes ZD, once set, cannot be varied when output limit value is changed.

As a prior art for solving the aforementioned problems, there is provided a rotary control method in Japanese laid open patent application No. Hei 1-94412 as depicted in Fig. 3.

In said rotary control method, the integrating circuit 101 comprising a PID controller is connected to a limiter 110 which is divided into 2 limiter circuits 105, 106 for controlling main and auxiliary integral signal values respectively in order to prevent the integral signal value of said integrating circuit from increasing above a limited value.

Said conventional rotary control method has an advantage of freely changing the output value of PID controller within predetermined scopes for control by sliding the variable contacts of variable resistors VR1, VR2, however, as the operating condition of the motor changes too often during operation, there has been a problem of being unable to set the output limit value in order to adapt to instantaneously-changing situations.

### SUMMARY OF THE INVENTION

Accordingly, it is an object of the present invention to improve the conventional problem by providing the limiter circuit of servo motor control apparatus designed to control the servo motor by way of the user's free selection of the rotating direction in the right or reverse direction or in both directions.

It is another object of the present invention to provide the limiter circuit of servo motor control apparatus for setting the output limit value of the servo motor which drives in the right or reverse or in both directions by varying freely said output limit value before starting.

It is yet another object of the present invention to provide the limiter circuit of the servo motor control apparatus, which can perform an adaptive control to cope with instantaneously-changing situations by setting up output limit value variably according to the displacement variation displayed as a difference between the desired value and actual displaced quantity even during the operation of the motor.

In accordance with one aspect of the present invention, there is provided a limiter circuit mounted on the servo motor control apparatus, comprising :
a motor rotating direction setter for setting up the rotating direction of the motor by the user's selection ;
an adder for calculating a displacement deviation by comparing a desired value with an actual quantity of motor displacement ;
a microprocessor for outputting the control signal of a switching means by calculating the instantaneous limit value of motor output after receiving displaced deviation data from said adder and by receiving the data of motor rotating direction from said motor rotating direction setter ;
a converter for converting the instantaneous limit value of digital shape outputted from said microprocessor to that of analog shape ;
an inverter for inverting the instantaneous limit value outputted from said converter ;
a switching means for selecting the output of instantaneous limit value outputted from said converter and inverter ; and
a limiter for limiting the amplitude of control signal outputted from PID controller within the instantaneous limit value selected according to the switching operation of said switching means.

The present invention is also additionally provided with a clamp voltage setting portion which the user can set up freely at said limiter in order for the user to limit freely the amplitude of control signal outputted from PID controller by way of the operation prior to the motor starting.

The present invention will be described in detail in the following in connection with the preferred embodiments thereof with reference to accompanying drawings.

### BRIEF DESCRIPTION OF THE DRAWINGS

For fuller understanding of the nature and objects of the invention, reference should be made to the following detailed description taken in conjunction with the accompanying drawings in which :
Fig. 1 is a block diagram of conventional PID controller ;
Fig. 2 is a limiter circuit drawing of conventional servo motor control apparatus ;

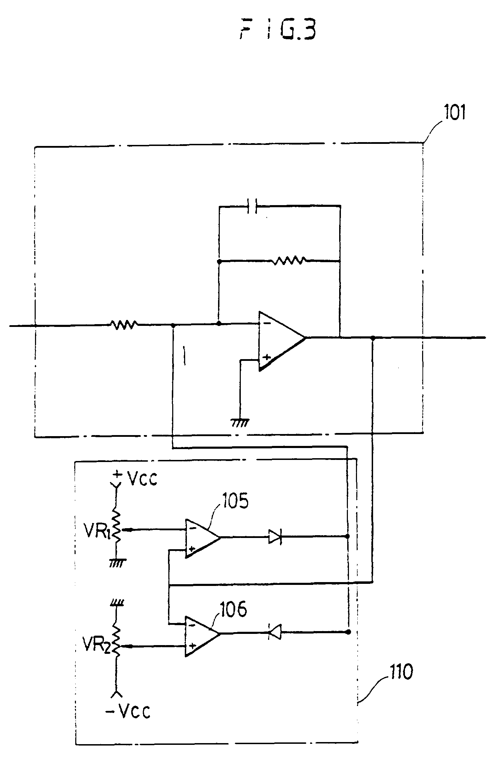

Fig. 3 is a limiter circuit drawing of another conventional servo motor control apparatus ;
Fig. 4, is a limiter circuit drawing of yet another conventional servo motor control apparatus in accordance with the present invention ;
Fig. 5 is a characteristic curve drawing of instantaneous limit value in accordance with the present invention ;
Fig. 6 is a table for explaining the operation of switching portion as depicted in Fig. 4 ;
Fig. 7A, Fig. 7B, Fig. 7C and Fig. 7D are graphs for explaining the characteristics about the input vs. output of the limiter circuit in accordance with the present invention ; and
Fig. 8 is a schematic block diagram of control apparatus of servo motor in accordance with the present invention.

### DETAILED DESCRIPTION OF THE INVENTION

Detailed explanation will be described in the following in connection with the preferred embodiments of the present invention with reference to accompanying drawings.

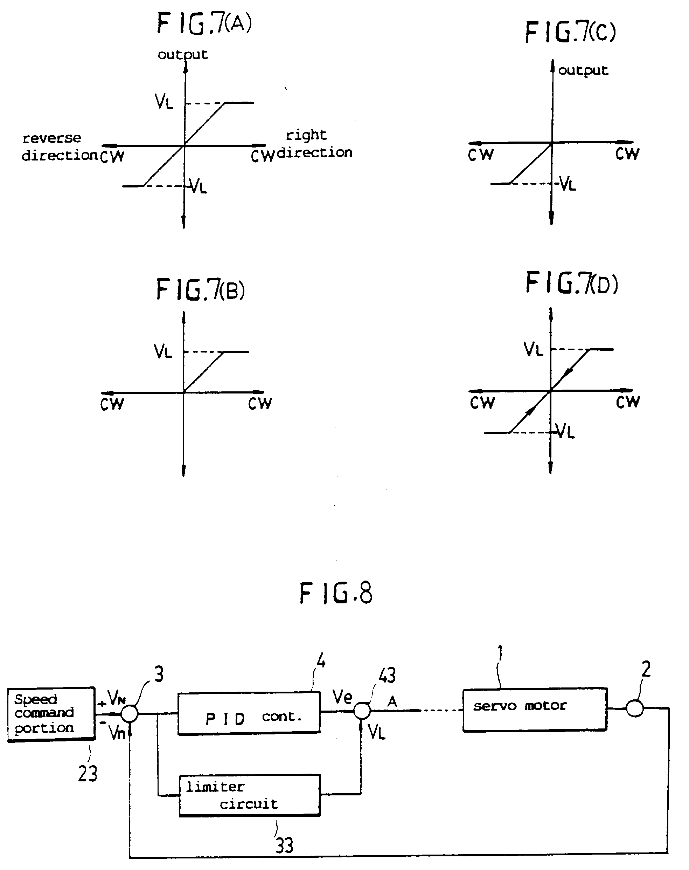

A process of the motor being automatically-controlled is shown in connection with Fig. 8.

As shown in Fig. 8, a shaft(not shown) of the servo motor 1 is installed with a speed detector 2 such as a resolver and the like which are used for rotary-type generator, and said speed resolver 2 generates analog voltage in proportion to rotating speed Vn of the motor.

Meanwhile, a speed command portion 23 supplies the analog voltage in proportion to the desired value VN to the adder 3, which outputs the displaced deviation e between the desired value VN and actual displacement quantity Vn to PID controller 4, which, in turn, generates control voltage Ve in proportion to said speed deviation VN-Vn corresponding to the control quantity of the servo motor 1.

Said adder 3 outputs the speed deviation e to the microprocessor 5 installed inside the limiter circuit of the present invention, and said microprocessor 5 outputs instantaneous limit value VL in proportion to said speed deviation.

Accordingly, the control voltage Ve outputted from said PID controller 4 and the instantaneous limit value VL outputted from the limiter circuit 33 are compared at comparator 43 for controlling said control voltage Ve within the scope of said instantaneous limit value VL.

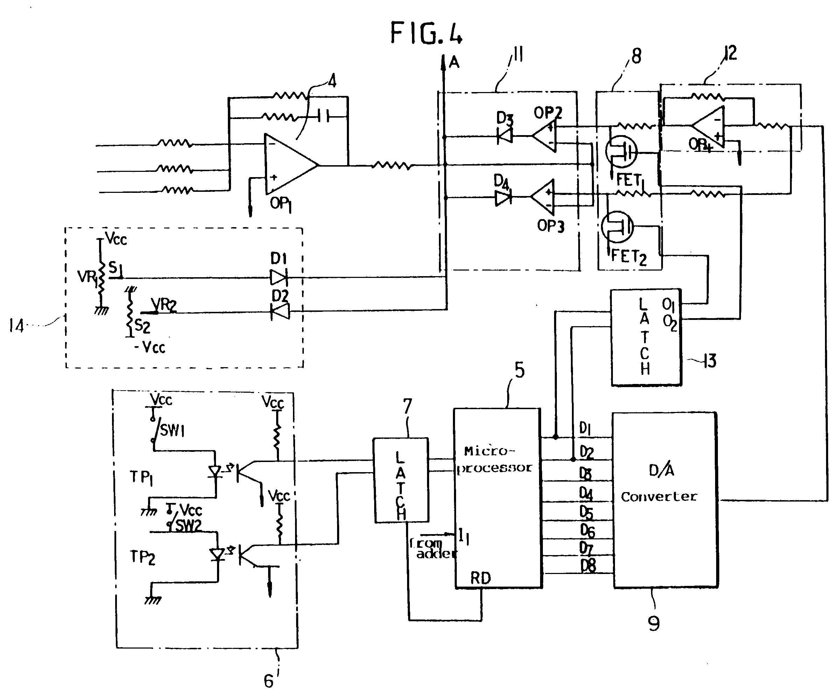

The motor rotating direction setter 6 as shown in Fig. 4 is operated for the microprocessor 5 to discriminate the rotating direction of the motor by way of the user's manual operation when the servo motor is supposed to be operated in the right or reverse direction, or in both directions, and the motor rotating direction setter 6 is constructed with one of each photo diode mounted on photo couplers TP1, TP2 connecting to switches SW1, SW2 which interrupt the power Vcc.

Accordingly, when the user switches said switches SW1, SW2 to selection mode, the data related with motor rotating direction are latched at a latch portion 7, and the microprocessor 5 controls the switching portion 8 comprising field effect transistors FET1, FET2 by discriminating rotating direction after received of the latched data and by accessing said latch portion 7 through read terminal RD.

The input I1 of said microprocessor 5 is, as depicted in Fig. 8, is connnected with desired voltage VN of the motor and the adder 3 which outputs the deviation e corresponding to the difference of actual displaced quantity Vn.

Accordingly, the microprocessor 5 converts the instantaneous limit value of digital shape corresponding to said deviation e to that of analog shape through D/A(Digital to Analog) conveter 9 and outputs to a limiting portion 11.

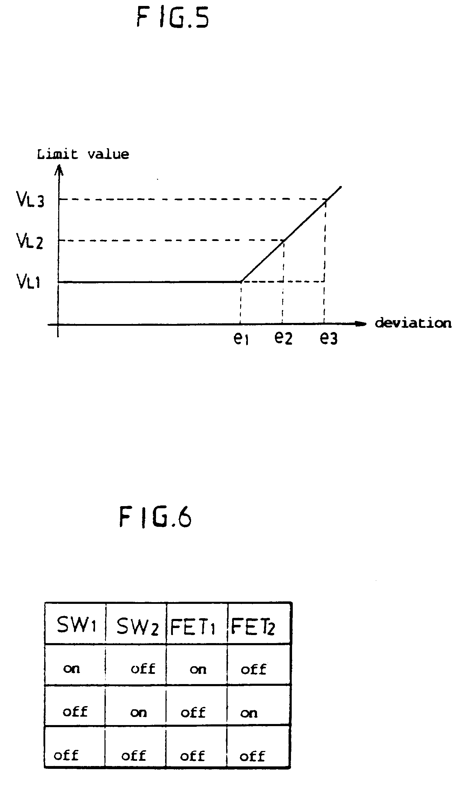

In other words, according to the characteristic curve as depicted in Fig. 5, predetermined instantaneous limit value VL1 is outputted to the limiting portion 11 connected to the output of PID controller 4 up to a section where said deviation e corresponds steady-state deviation e1, and when said deviation e diviates from the steady-state deviation e1 to increase to a deviation e2, instantaneous limit value VL is increased to VL2, further increased to VL3 at e3 and is outputted to limiting portion 11 for the prevention of over-run or burn-out of the servo motor.

Meanwhile, the microprocessor 5 is programmed with the characteristic curve as illustrated in Fig. 5 before being installed to the apparatus.

By calculating the deviation e in the foregoing according to the program, the instantaneous limit value VL outputted from the microprocessor 5 is converted to analog value at D/A converter 9 and inputted to the limiting portion 11 Comprising O. P. amplifiers (operational amplifier) OP2, OP3. The non-inversion input(+) of said OP2 is connected to an inverter 12 comprising operational amplifier, OP4, so said O. P. amplifier OP2 is applied with the instantaneous limit value VL of inverted analog type, and the outputs of said operational amplifiers OP2, OP3 comprise voltage followers feedbacking to an inversion input(-) through diodes D3, D4.

Meanwhile, as the front ends of said operational amplifiers OP2, OP3 are connected with the switching portion 8 comprising FET1, FET2, the instantaneous limit value VL is selectively inputted to the limiting portion 11 in accordance with operational conditions of switches SW1, SW2 mounted on the rotating direction setter 6.

In other words, if switch SW1 only mounted on said rotating direction setter 6 is turned on, low signal is outputted from the output O1 of the latch portion connected to said microprocessor 5 and high signal which turns on FET is outputted from the other output O2 for turning-on of FET1 mounted on the switching portion 8, and FET2 is caused to maintain the turned-off condition.

In another embodiment, if the switch SW2 only is turned on, FET1 keeps maintaining the turned-off condition as depicted in Fig. 6, while FET2 is caused to turn on. If said switches SW1, SW2 are all caused to turn off, FET1 as well as FET2 keep maintaining the turned-off condition.

Accordingly, if switches SW1, SW2 are all turned off in order to perform servo control against the right and reverse directions, as depicted in Fig. 4, FET1, FET2 mounted on the switching portion 8 come to turn off, so that the instantaneous limit value VL outputted from D/A converter 9 is applied to non-inversion input(+) of opertional amplifiers OP2, OP3 mounted on the limiting portion 11, however as said operational amplifier OP2 is applied with inverted-VL from the inverter 12, the control voltage V2 outputted from PID controller 4 is limited within the scope of said instantaneous limit value VL, -VL at said limiting portion 11.

In other words, if the control voltage Ve outputted from said PID controller 4 becomes higher than the instantaneous limit value VL, a diode D4 connected to the output of operational amplifier OP3 is turned on for output of said instantaneous limit value VL to the output A of said PID controller 4.

Meanwhile, when control voltage Ve come to be lower than said instantaneous limit value-VL, the diode D3 connected to the output of operation amplifier OP2 come to turn on for ouptut of inverted instantaneous limit value-VL to the output A of said PID controller 4, however, if said control voltage Ve is within the scope of inequality-VL <Vc <VL, reverse directional bias is formed in said diodes D3, D4, so that the control voltage V3 can be outputted as is, and the output waveform thereof is shown in Fig. 7A.

Meanwhile, if the switch SW1 mounted on rotating direction setter 6 is only turned on in order to perform servo control when the motor is rotated only in the right direction, FET1 mounted on the switching portion 8, as illustrated in Fig. 6, come to turn on and FET2 keeps maintaining the turned-off condition, so that the instantaneous reference value VL can be applied to the operational amplifier OP3 in the limiting portion 11 and earthed electric potential is applied to operational amplifier OP2 due to the turned-on of FET1.

Accordingly, when the control voltage Ve outputted from said PID controller 4 come to be higher than said instantaneous reference value VL, the diode D4 is turned on, so that the instantaneous reference value VL can be outputted to the output A of said PID controller 4, however, when the control voltage Ve come to be lower than VL, reverse directional bias is formed in said diode D4, so that the control voltage Ve can be outputted as depicted in Fig. 7B.

If the switch SW2 mounted on said rotating direction setter 6 is only turned on in order to perform servo control when said servo motor is rotated in reverse direction, FET2 mounted on the switching portion 8 is caused turn on and FET1 comes to turn off, so that instantaneous reference value-VL inverted from the inverter is applied to the non-inversion input(+) of operational amplifier OP2.

Accordingly, when the control voltage Ve outputted from said PID controller 4 comes to be lower than said instantaneous reference value-VL, causing the diode D3 to come to turn on, said instantaneous reference value-VL is outputted to the output A of said PID controller, however when the control voltage Ve is higher than-VL, the reverse directional bias is formed in said diode D3, and as depicted in Fig. 7C, the control voltage Ve is outputted.

As in the foregoing, the amplitude of control voltage outputted from said PID controller 4 is limited to the instantaneous reference value VL outputted from the microprocessor 5, and as the value of said instantaneous reference value VL varies in accordance with the deviation e outputted from the adder 3, the control voltage Ve outputted from PID controller 4 also varies as illustrated in Fig. 7D.

The output of said PID controller 4 in accordance with the present invention is connected with a clamp voltage setting portion 14 along with said limiting portion 11, so that the maximum and minimum values of control voltage Ve can be set up before the motor is started.

In other words, one end of the variable resistor VR1 which sets the maximum value is connected with a positive voltage source +Vcc, the movable contact S1 of which is then connected to a diode D1, and meanwhile, one end of the variable resistor VR2 which sets the minimum value is connected with a negative voltage source -Vcc, the movable contact S2 of which is then connected to the diode D2. At this point, said diodes D1, D2 are all connected to the output of said PID controller 4.

Accordingly, when said variable resistor VR1 is set as maximum value VL and said variable resistor VR2 is set as minimum value -VL, the control voltage Ve outputted from PID controller 4 is limited to a scope of said VL and -VL.

In other words, when the voltage Ve outputted from PID controller 4 comes to be higher than VL, VL is outputted to the output A as the diode D1 is turned on, and when Ve comes to be lower than -VL, -VL is outputted to the output A as the diode D2 is turned on, however, when said Ve satisfies the inequality, -VL<VC<VL, the control voltage Ve is outputted as is.

As in the foregoing, the present invention can set the limit reference voltage according to the rotating direction when a rotating instrument is automatically operated in the right, or reverse direction, or in both directions, and said limit reference voltage can be set variably according to the program stored in the microprocessor, and of course the present invention can obtain the effect of limiting the control voltage outputted from PID controller when the user sets said limit reference voltage by manual operation.

## Claims

1. A limiter circuit of a servo motor control apparatus including a PID controller (4), which performs the rotary control of a servo motor (1) comprises :
a motor rotating direction setter (6) for setting the rotational direction of the motor by the user's selection ;
an adder (3) for calculating a displacement deviation by comparing a desired value to an actual motor displacement quantity (e) ;
a microprocessor (5) for calculating instantaneous limit value of motor output by receiving said displacement deviation from said adder and for outputting switching signal by receiving rotating direction data from said motor rotating direction setter ;
a converter (9) for converting the instantaneous limit value of digital signal type outputted from said microprocessor to that of analog signal type ;
an inverter (12) for inverting the instantaneous limit value outputted from said converter ;
a switching means (8) for selecting the dutput of the instantaneous limit value outputted from said converter and inverter ; and
a limiter (11) for limiting the amplitude of control voltage outputted from the PID controller (4) within the scope of the instantaneous limit value selected according to the switching operation of said switching means.

2. The limiter circuit of the servo motor control appartus as defined in claim 1, wherein the output of said limiter is connected to a clamp voltage setting means, the output limit value of which can be freely set up by the user.

## Patentansprüche

1. Begrenzerschaltung für eine Servomotor-Steuervorrichtung, die einen PID-Regler (4) umfaßt und die Drehsteuerung eines Servomotors (1) ausführt, mit:
einem Motor-Drehrichtungs-Einsteller (6) zum Einstellen der Drehrichtung des Motors nach Wahl der Bedienungsperson;
einem Addierer (3) zum Berechnen einer Verschiebungsabweichung durch Vergleichen eines gewünschten Wertes mit einer tatsächlichen Motor-Verschiebungsgröße (e);
einem Mikroprozessor (5) zum Berechnen eines augenblicklichen Grenzwertes eines Motorausgangs durch Erhalten der Verschiebungsabweichung vom Addierer und zum Ausgeben eines Schaltsignals durch Erhalten der Drehrichtungsdaten von dem Motor-Drehrichtungs-Einsteller;
einem Umformer (9) zum Umformen des augenblicklichen Grenzwertes in vom Mikroprozessor ausgegebener digitaler Signalform in analoge Signalform;
einem Inverter (12) zum Invertieren des vom Umformer ausgegebenen augenblicklichen Grenzwertes;
einer Schaltereinrichtung (8) zum Auswählen des Ausgangs des augenblicklichen Grenzwertes, der vom Umformer und vom Inverter ausgegeben wird, und
einem Begrenzer (11) zum Begrenzen der Amplitude der vom PID-Regler (4) ausgegebenen Steuerspannung innerhalb des Umfangs des augenblicklichen Grenzwertes, der nach Maßgabe der Schaltoperation der Schaltereinrichtung ausgewählt ist.

2. Begrenzerschaltung für eine Servomotor-Steuervorrichtung nach Anspruch 1, wobei der Ausgang des Begrenzers mit einer Klammerspannung-Einstelleinrichtung verbunden ist, deren Ausgangsgrenzwert von der Bedienungsperson frei einstellbar ist.

## Revendications

1. Circuit limiteur d'un appareil de commande de servomoteur, incluant un régulateur à action proportionnelle, intégrale et dérivée PID (4), qui effectue la commande rotative d'un servomoteur (1), qui comprend :
un dispositif de fixation du sens de rotation du moteur (6) pour fixer le sens de rotation du moteur par la sélection de l'utilisateur ;
un additionneur (3) pour calculer un écart de déplacement en comparant une valeur souhaitée à une quantité réelle de déplacement de moteur (e) ;
un microprocesseur (5) pour calculer une valeur limite instantanée de sortie de moteur à réception dudit écart de déplacement dudit additionneur et pour délivrer un signal de commutation à réception des données de sens de rotation en provenance dudit dispositif de fixation de sens de rotation de moteur ;
un convertisseur (9) pour transformer la valeur limite instantanée du signal du type numérique délivré par ledit microprocesseur en un signal du type analogique ;
un inverseur (12) pour inverser la valeur limite instantanée délivrée par ledit convertisseur ;
un moyen de commutation (8) pour sélectionner la sortie de la valeur limite instantanée délivrée par ledit convertisseur et par ledit inverseur ; et
un limiteur (11) pour limiter l'amplitude de la tension de commande délivrée par le régulateur à action proportionnelle, intégrale et dérivée PID (4) à l'intérieur de l'étendue de la valeur limite instantanée sélectionnée selon l'opération de commutation dudit moyen de commutation.

2. Circuit limiteur de l'appareil de commande de servomoteur selon la revendication 1, dans lequel la sortie dudit limiteur est reliée à un moyen de fixation de tension de blocage, dont la valeur limite de sortie peut être librement fixée par l'utilisateur.
